(19) Europäisches Patentamt
European Patent Office
Office européen des brevets

(11) **EP 4 734 392 A1**

(12) **EUROPEAN PATENT APPLICATION**

(43) Date of publication:
**29.04.2026 Bulletin 2026/18**

(21) Application number: **25210128.2**

(22) Date of filing: **21.10.2025**

(51) International Patent Classification (IPC):
**H04B 7/06** (2006.01)  **H04B 7/12** (2006.01)
**H04W 72/0453** (2023.01)

(52) Cooperative Patent Classification (CPC):
**H04B 7/0617; H04B 7/0695; H04B 7/12;
H04W 72/0453**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **25.10.2024 FI 20246269**

(71) Applicant: **Nokia Solutions and Networks Oy
02610 Espoo (FI)**

(72) Inventors:
• **NGUYEN, Giang
Oulu (FI)**
• **NG, Man Hung
Swindon (GB)**

(74) Representative: **Nokia EPO representatives
Nokia Technologies Oy
Karakaari 7
02610 Espoo (FI)**

(54) **FREQUENCY-INDEPENDENT PHASE SHIFTERS AND MULTIBAND BEAMFORMING**

(57) An antenna array of frequency-independent phase shifters may be configured to provide band-specific beamforming over a plurality of operating bands by determining, based on a first frequency allocation on a first operating band with first angular directions, at least a second frequency allocation on a second operating band with a second angular directions, so that a first set of predefined requirements comprising at least beamforming requirements on frequency allocations and angular directions are met on all operating bands, determining beamforming weights, and configuring the antenna array to apply the beamforming weights.

FIG.9

**Description**

TECHNICAL FIELD

Various example embodiments relate to wireless communications.

BACKGROUND

Communication systems are under constant development. For example, frequency ranges are covering more and more different bands, including high frequency bands. To improve link budget and cell coverage, multi-antenna arrays and directional beams may be used. A solution providing an antenna that is capable to band-specific beamforming over a plurality of operating bands with a reasonable number of radio frequency components in the antenna is desired.

SUMMARY

The independent claims define the scope.

According to an aspect there is provided an apparatus comprising: at least one processor; and at least one memory storing instructions that, when executed by the at least one processor, cause the apparatus to perform, per an antenna array of frequency-independent phase shifters, the antenna array being shared between a plurality of operating bands, at least: determining, based on a first frequency allocation on a first operating band with first angular directions, at least a second frequency allocation on a second operating band with a second angular directions, so that a first set of predefined requirements comprising at least beamforming requirements on frequency allocations and angular directions are met on all operating bands; determining beamforming weights based at least on one of a plurality of frequency allocations with angular directions; and configuring the antenna array to apply the beamforming weights.

In one or more embodiments, the predefined beamforming requirements comprise beamwidth requirements, beam peak direction requirements, and beam directivity requirements.

In one or more embodiments, the predefined requirements further comprise allowable frequency ranges for the operating bands and allowable frequency allocations.

In one or more embodiments, the at least one processor and the at least one memory storing instructions, when executed by the at least one processor, further cause the apparatus at least to perform, per the antenna array: using, when the first frequency allocation with the first angular directions are allocated to be used between the apparatus and a second apparatus and determining the second frequency allocation with the second angular directions using the first set of predefined requirements fails, a second set of predefined beamforming requirements allowing at least one of a wider beamwidth, less accurate beam peak direction requirements, or less accurate beam directivity requirements to determine the second frequency allocation with the second angular directions.

In one or more embodiments, the at least one processor and the at least one memory storing instructions, when executed by the at least one processor, further cause the apparatus at least to perform, per the antenna array: adjusting, when determining the second frequency allocation with the second angular directions using the first set of predefined requirements fails, at least one of the first frequency allocation or the first angular directions; and determining, after the adjusting, the second frequency allocation with the second angular directions so that the first set of predefined requirements are met; and repeating, when the determining, after the adjusting, the second frequency allocation with the second angular directions fails, the adjusting at least one of the first frequency allocation or the first angular directions and the determining the second frequency allocation with the second angular directions, until the first set of predefined requirements are met.

In one or more embodiments, the at least one processor and the at least one memory storing instructions, when executed by the at least one processor, further cause the apparatus at least to perform, per the antenna array, the determining of the second frequency allocation with the second angular directions by: assigning initial second angular directions; and determining the second frequency allocation with the second angular directions by searching for a second frequency allocation on the second operating band using the initial second angular directions.

In one or more embodiments, the at least one processor and the at least one memory storing instructions, when executed by the at least one processor, further cause the apparatus at least to perform, per the antenna array: adjusting, when determining the second frequency allocation with the second angular directions using the first set of predefined requirements fails, at least one of the first angular directions or the initial second angular directions; determining, after the adjusting, determining the second frequency allocation with the second angular directions so that the first set of predefined requirements are met; and repeating, when the determining, after the adjusting, the second frequency allocation with the second angular directions fails, the adjusting at least one of the first angular directions or the initial second angular directions and the determining the second frequency allocation with the second angular directions until the first set of predefined requirements are met.

In one or more embodiments, the at least one processor and the at least one memory storing instructions, when executed by the at least one processor, further cause the apparatus at least to perform, per the antenna array, the determining of the second frequency allocation with the second angular directions by: assigning initial second frequency allocation on the second operating band; and determining the second frequency allocation with the second angular directions by searching for second angular directions using the initial second frequency allocation.

In one or more embodiments, the at least one processor and the at least one memory storing instructions, when executed by the at least one processor, further cause the apparatus at least to perform, per the antenna array: adjusting, when determining the second frequency allocation with the second angular directions using the first set of predefined requirements fails, at least one of the first frequency allocation or the initial second frequency allocation; determining, after the adjusting, the second frequency allocation with the second angular directions so that the first set of predefined requirements are met; and repeating, when the determining, after the adjusting, the second frequency allocation with the second angular directions fails, the adjusting one of the first frequency allocation or the initial second frequency allocation and the determining the second frequency allocation with the second angular directions until the first set of predefined requirements are met.

In one or more embodiments, the at least one processor and the at least one memory storing instructions, when executed by the at least one processor, further cause the apparatus at least to perform, per the antenna array, the determining of frequency allocations with corresponding angular directions by using a tool configured to implement the predefined requirements.

In one or more embodiments, the at least one processor and the at least one memory storing instructions, when executed by the at least one processor, further cause the apparatus at least to perform, per the antenna array, the determining of the second frequency allocation with the second angular directions by retrieving the values from a table comprising for the operating bands angular directions and corresponding frequency values meeting the predefined requirements.

In one or more embodiments, the apparatus is or is comprised in a radio access network element.

In one or more embodiments, the apparatus is or is comprised in a terminal device.

According to an aspect there is provided a method comprising: determining, by an apparatus, for an antenna array of frequency-independent phase shifters, based on a first frequency allocation on a first operating band with first angular directions, at least a second frequency allocation on a second operating band with a second angular directions, so that a first set of predefined requirements comprising at least beamforming requirements on frequency allocations and angular directions are met on all operating bands; determining, by the apparatus, beamforming weights based at least on one of a plurality of frequency allocations with angular directions; and configuring the antenna array to apply the beamforming weights.

According to an aspect there is provided a computer readable medium comprising program instructions which, when executed by an apparatus, cause the apparatus to perform at least: determining for an antenna array of frequency-independent phase shifters, based on a first frequency allocation on a first operating band with first angular directions, at least a second frequency allocation on a second operating band with a second angular directions, so that a first set of predefined requirements comprising at least beamforming requirements on frequency allocations and angular directions are met on all operating bands; determining beamforming weights based at least on one of a plurality of frequency allocations with angular directions; and configuring the antenna array to apply the beamforming weights.

According to an aspect there is provided a non-transitory computer readable medium comprising program instructions which, when executed by an apparatus, cause the apparatus to perform at least: determining for an antenna array of frequency-independent phase shifters, based on a first frequency allocation on a first operating band with first angular directions, at least a second frequency allocation on a second operating band with a second angular directions, so that a first set of predefined requirements comprising at least beamforming requirements on frequency allocations and angular directions are met on all operating bands; determining beamforming weights based at least on one of a plurality of frequency allocations with angular directions; and configuring the antenna array to apply the beamforming weights.

According to an aspect there is provided a computer program comprising instructions which, when executed by an apparatus, cause the apparatus to perform at least: determining for an antenna array of frequency-independent phase shifters, based on a first frequency allocation on a first operating band with first angular directions, at least a second frequency allocation on a second operating band with a second angular directions, so that a first set of predefined requirements comprising at least beamforming requirements on frequency allocations and angular directions are met on all operating bands; determining beamforming weights based at least on one of a plurality of frequency allocations with angular directions; and configuring the antenna array to apply the beamforming weights.

BRIEF DESCRIPTION OF DRAWINGS

Embodiments are described below, by way of example only, with reference to the accompanying drawings, in which

Fig. 1 illustrates an exemplified high-level network architecture;

Fig. 2 is a schematic block diagram depicting an antenna beamforming structure;

Fig. 3 is a schematic block diagram depicting an example of multi-band frequency allocations;

Fig. 4 illustrates an example functionality;

Fig. 5 illustrates an example functionality;

Fig. 6 illustrates an example functionality;

Fig. 7 illustrates an example functionality;

Fig. 8 illustrates an example functionality;

Fig. 9 illustrates an example functionality;

Fig. 10 illustrates an example functionality;

Fig. 11 is a schematic block diagram; and

Fig. 12 is a schematic block diagram.

DETAILED DESCRIPTION OF SOME EMBODIMENTS

The following embodiments are only presented as examples. Although the specification may refer to "an", "one", or "some" embodiment(s) and/or example(s) in several locations, this does not necessarily mean that each such reference is to the same embodiment(s) or example(s), or that a particular feature only applies to a single embodiment and/or single example. Single features of different embodiments and/or examples may also be combined to provide other embodiments and/or examples. Furthermore, words "comprising" and "including" should be understood as not limiting the described embodiments to consist of only those features that have been mentioned and such embodiments may contain also features/structures that have not been specifically mentioned.

Some example embodiments described herein may be implemented in a wireless communication network comprising a radio access network based on one or more of the following radio access technologies (RATs): global system for mobile communications (GSM) or any other second generation (2G) radio access technology, universal mobile telecommunication system (UMTS, 3G) based on basic wideband-code division multiple access (W-CDMA), high-speed packet access (HSPA), long term evolution (LTE), LTE-Advanced, fourth generation (4G), fifth generation (5G), 5G new radio (NR), 5G-Advanced, or sixth generation (6G), or beyond. Some examples of radio access networks include the universal mobile telecommunications system (UMTS) radio access network (UTRAN), the evolved universal terrestrial radio access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications. IEEE is an abbreviation for the Institute of Electrical and Electronics Engineers.

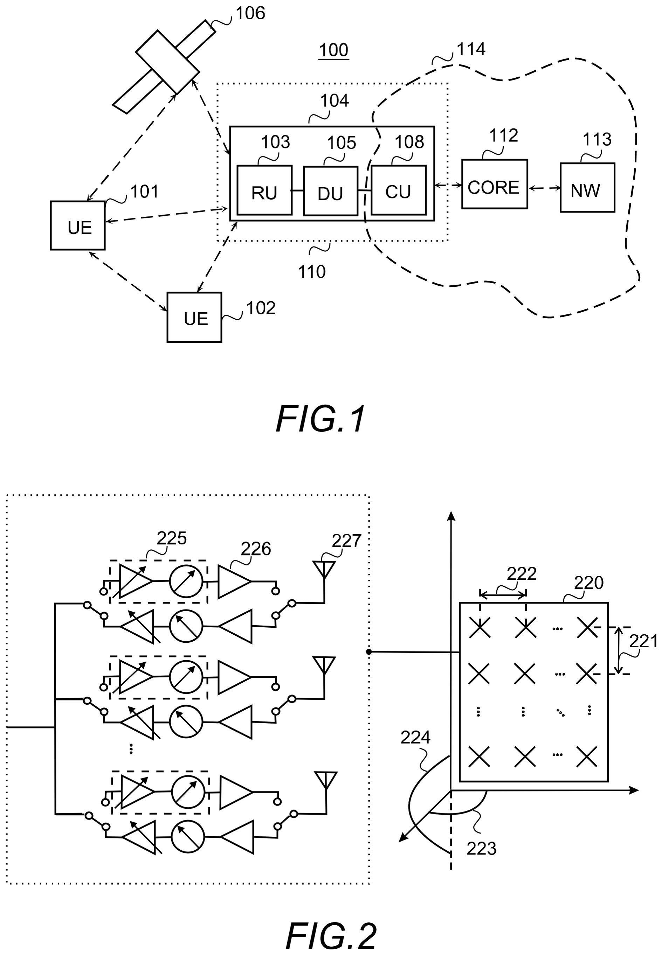

Fig. 1 depicts an example of a simplified wireless communication network architecture showing some physical and logical entities. The connections shown in Fig. 1 may be physical connections or logical connections. It is apparent to a person skilled in the art that the wireless communication network may also comprise other physical and logical entities than those shown in Fig. 1.

The example wireless communication network shown in Fig. 1 includes a radio access network (RAN) 110 and a core network 112.

Fig.1 shows user equipment (UE) 101, 102, configured to be in a wireless connection on one or more communication channels in a radio cell with an access node 104 of a radio access network 110.

The access node 104 may comprise a computing device configured to control the radio resources of the access node 104 and to be in a wireless connection with one or more UEs 101, 102. The access node 104 may also be referred to as a base station, a base transceiver station (BTS), an access point, a cell site, a network node, a radio access network node, or a RAN node. In this description, the terms "access node" and "radio access network node" may be used interchangeably.

The access node 104 may be, for example, an evolved NodeB (abbreviated as eNB or eNodeB), or a next generation evolved NodeB (abbreviated as ng-eNB), or a next generation NodeB (abbreviated as gNB or gNodeB), a split gNB, a transmission-reception point, a donor node in integrated access and backhaul (IAB), a fixed IAB node, a mobile IAB node, i.e. an apparatus or device providing the radio cell. The access node 104 may include or be coupled to transceivers. From the transceivers of the access node 104, a connection may be provided to an antenna unit that establishes a bi-directional radio link to one or more UEs 101, 102. The antenna unit may comprise an antenna or antenna element, or a plurality of antennas or antenna elements.

The wireless connection (e.g., radio link) from a UE 101, 102 to the access node 104 may be called uplink (UL) or reverse link, and the wireless connection (e.g., radio link) from the access node 104 to the UE 101, 102 may be called downlink (DL) or forward link. A UE 101 may also communicate directly with another UE 102, and vice versa, via a wireless connection generally referred to as a sidelink (SL). It should be appreciated that the access node 104 or its functionalities may be implemented by using any node, host, server, access point or other entity suitable for providing such functionalities.

The radio access network may comprise more than one access node 104, in which case the access nodes may also be configured to communicate with one another over wired or wireless links. These links between access nodes may be used for transmitting (sending) and receiving control plane signaling and also for routing data from one access node to another access node.

The access node 104 may further be connected to a core network (CN) 112. The core network 112 may comprise an evolved packet core (EPC) network and/or a $5^{th}$ generation core network (5GC). The EPC may comprise network entities, such as a serving gateway (S-GW for routing and forwarding data packets), a packet data network gateway (P-GW) for providing connectivity of UEs to external packet data networks, and/or a mobility management entity (MME). The 5GC may comprise one or more network functions, such as at least one of: a user plane function (UPF), an access and mobility management function (AMF), a location management function (LMF), and/or a session management function (SMF).

The core network 112 may also be able to communicate with one or more external networks 113, such as a public switched telephone network or the Internet, or utilize services provided by them. For example, in 5G wireless communication networks, the UPF of the core network 112 may be configured to communicate with an external data network via an N6 interface. In LTE wireless communication networks, the P-GW of the core network 112 may be configured to communicate with an external data network.

It should also be understood that the distribution of functions between core network operations and access node operations may differ in future wireless communication networks compared to that of the LTE or 5G, or even be non-existent.

The illustrated UE 101, 102 is one type of an apparatus to which resources on the air interface may be allocated and assigned. The UE 101, 102 may also be called a wireless communication device, a subscriber unit, a mobile station, a remote terminal, an access terminal, a user terminal, a terminal device, or a user device, or shortly just a device, just to mention but a few names. The UE 101, 102 may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a sensor comprising a wireless modem, a drone, a smart device, a mobile robot, an autonomous vehicle, or a computing device comprising a wireless modem integrated in a vehicle.

It should be appreciated that the UE 101, 102 may also be a nearly exclusive uplink-only device, of which an example may be a camera or video camera loading images or video clips to a network. The UE 101, 102 may also be a device having capability to operate in an Internet of Things (IoT) network, which is a scenario in which objects may be provided with the ability to transfer data over a network without requiring human-to-human or human-to-computer interaction.

The wireless communication network may also be able to support the usage of cloud services. In 5G, the wireless communication network may be a service based architecture in which components (elements, functional units) of the service based architecture are defined using network functions that may be cloud-ified network functions. A network function supports or hosts a collection of services and offers one or more services to other network functions in the network. The network functions may be deployed as microservices. A service consumer, or shortly a consumer, is a network function requesting, or subscribing, a service from another network function, which is a service producer, or shortly a producer, that provides the service as a reply (response) or a notification. For example, at least part of core network operations may be carried out as a cloud service (this is depicted in Fig. 1 by "cloud" 114). The UE 101, 102 may also utilize the cloud 114. In some applications, the computation for a given UE may be carried out in the cloud 114 or in another UE.

The wireless communication network may also comprise a central control entity, such as a network management system (NMS), or the like. The NMS is a centralized suite of software and hardware used to monitor, control, and administer the network infrastructure. The NMS is responsible for a wide range of tasks such as fault management, configuration management, security management, performance management, and accounting management. The NMS enables network operators to efficiently manage and optimize network resources, ensuring that the network delivers high performance, reliability, and security.

5G enables using multiple-input and multiple-output (MIMO) antennas in the access node 104 and/or the UE 101, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine-type applications, such as (massive) machine-type communications (mMTC), including vehicular safety, different sensors and real-time control.

In 5G wireless communication networks, access nodes and/or UEs may have multiple radio interfaces, such as below 6 gigahertz (GHz), centimeter wave (cmWave) and millimeter wave (mmWave), and also being integrable with legacy radio access technologies, such as LTE. Integration with LTE may be implemented, for example, as a system, where macro coverage may be provided by LTE, and 5G radio interface access may come from small cells by aggregation to LTE. In other words, a 5G wireless communication network may support both inter-RAT operability (such as interoperability between LTE and 5G) and inter-RI operability (inter-radio interface operability, such as between below 6GHz, cmWave, and mmWave).

5G wireless communication networks may also apply network slicing, in which multiple independent and dedicated virtual sub-networks (network instances) may be created within the same physical infrastructure to run services that have different requirements on latency, reliability, throughput and mobility.

In one embodiment, an access node 104 may comprise: a radio unit (RU) 103 comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node 104 may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node 104. The CU 108 may comprise a control plane (CU-CP), which may be a logical node hosting the RRC and the control plane part of the PDCP protocol of the NR protocol stack for the access node 104. The CU 108 may further comprise a user plane (CU-UP), which may be a logical node hosting the user plane part of the PDCP protocol and the SDAP protocol of the CU for the access node 104.

The DU 105 may be a logical node hosting radio link control (RLC), medium access control (MAC) and/or physical (PHY) layers of the NR protocol stack for the access node 104. The operations of the DU 105 may be at least partly controlled by the CU 108. It should also be understood that the distribution of functions between the DU 105 and the CU 108 may vary depending on the implementation.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the radio access network by utilizing network function virtualization (NFV) and software defined networking (SDN). Using edge cloud may mean access node operations to be carried out, at least partly, in a computing system operationally coupled to a remote radio head (RRH) or a radio unit (RU) 103 of an access node 104. It is also possible that access node operations may be performed on a distributed computing system or a cloud computing system located at the access node 104. Application of cloud RAN architecture enables RAN real-time functions being carried out at the radio access network (e.g., in a DU 105), and non-real-time functions being carried out in a centralized manner (e.g., in a CU 108).

5G (or new radio, NR) wireless communication networks may support multiple hierarchies, where multi-access edge computing (MEC) servers may be placed between the core network 112 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network 112, enabling more extensive network coverage. Possible use cases may include: providing service continuity for machine-to-machine (M2M) or Internet of Things (IoT) devices or for passengers on board of vehicles, or ensuring service availability for critical communications, and future railway, maritime, or aeronautical communications. Satellite communication may utilize geostationary earth orbit (GEO) satellite systems, but also low earth orbit (LEO) satellite systems, in particular mega-constellations (i.e., systems in which hundreds of (nano)satellites are deployed). A given satellite 106 in the mega-constellation may cover several satellite-enabled network entities that create on-ground cells. The on-ground cells may be created through an on-ground relay access node or by an access node located on-ground or in a satellite.

It is obvious for a person skilled in the art that the access node 104 depicted in Fig. 1 is just an example of a part of a radio access network, and in practice the radio access network may comprise a plurality of access nodes 104, the UEs 101, 102 may have access to a plurality of radio cells, and the radio access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of a radio access network, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) 104 of Fig. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of radio access networks, the concept of "plug-and-play" access nodes may be introduced. A radio access network, which may be able to use "plug-and-play" access nodes, may include, in addition to Home eNodeBs or Home gNodeBs, a Home Node B gateway (HNB-GW) (not shown in Fig. 1). An HNB-GW, which may be installed within an operator's radio access network, may aggregate traffic from a large number of Home eNodeBs or Home gNodeBs back to a core network 112 of the operator.

6G wireless communication networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G may include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

The examples described below use principles and terminology of 5G and 6G radio access technology without limiting the example embodiments to 5G and 6G radio access technology, however. A person skilled in the art may apply the solutions and examples to other communication systems, for example beyond 5G, e.g. 6G, 7G, provided with necessary properties. Further, for the sake of clarity of the description, the different examples are described herein using a first operating band and a second operating band, i.e. a dual-band solution, without limiting multi-band solutions to the dual-band solution. It is a straightforward task for a person skilled in the art to implement the examples described herein for solutions in which more than two operating bands are involved.

Fig. 2 is a schematic block diagram depicting an antenna beamforming structure for analog beamforming. The illustrated structure is a multiband structure allowing signals from different operating bands to be transmitted and received via a same antenna array of frequency-independent phase shifters. The frequency-independent phase shifters are also called as frequency-flat phase shifters or wideband phase shifters.

Referring to Fig. 2, an antenna array 220, i.e. an antenna panel, comprises a plurality of antenna elements. Antenna element separations, i.e. distances 221, 222 between two antenna elements, dictate beam performance of the antenna array 220. The beam performance includes beam-steerable angle ranges for an azimuth angle 223 (angle in horizontal plane) and for an elevation angle 224 (angle in vertical plane), and directivity gain. For example, a high antenna element separation limits the ranges of acceptable steering angles but create a high directivity gain, while small antenna element separation allows broader ranges of acceptable steering angles but yield a low directivity gain.

The antenna separation $d_\lambda$ at frequency $f_c$ is defined as

$$d_\lambda = \frac{d}{\lambda} = \frac{d * c}{f_c}$$

where d is the antenna element separation in a physical dimension 221, 222, which is fixed, and c is the speed of light. It means that in multiband application using the same antenna array with the same antenna element separation, an antenna separation for one frequency is different from antenna separations of other frequencies. Hence, one may say that each operating band will have different antenna array performance.

Further, a beam weight value used in beamforming to generate a beam pointing to a specific direction depends on the antenna separation at the operating frequency and the angular directions, i.e. horizontal and vertical directions.

The antenna array 220 comprises a plurality of antenna paths. An antenna path comprises a frequency-independent phase shifter 225, a power amplifier 226 and an antenna element 227. When an input signal, i.e. a radio frequency signal from a transmission/reception chain (not illustrated in Fig. 2) is received to be transmitted via the antenna array, the signal is routed to a plurality of antenna paths for transmission, and in each antenna path for transmission, the signal goes to the frequency-independent phase shifter, where the amplitude and phase of the signal are shifted for beamforming purposes, then the signal goes to the power amplifier to be amplified and then the signal will be emitted from the antenna element. When a signal is received, it is received over a plurality of antenna paths for reception, an antenna path for reception having corresponding components than the antenna path for transmission, but the received signal travels through the components in a reverse order. The components may be integrated in a so-called beamforming radio frequency integrated circuit, which is an electrical integrated circuit operating in a frequency range suitable for wireless transmission.

The value how much the amplitude and phase of the signal are adjusted in the frequency-independent phase shifter 225 is called a beamforming weight, or shortly beam weight. Basically, the frequency-independent phase shifter 225, or shortly phase shifter, can apply one beam weight at a specific time instance, meaning that a same beamforming weight will be applied to all frequency bands within the input signal, resulting in different beamforming directions for different frequency bands within the input signal if the bands are sufficiently far apart in frequency. By determining frequency allocations and beam weights as will be described below, a beam formed by the antenna array will point to expected direction of "counter-apparatuses", e.g. user equipment, when the beam is formed by an access node, in different operating bands simultaneously.

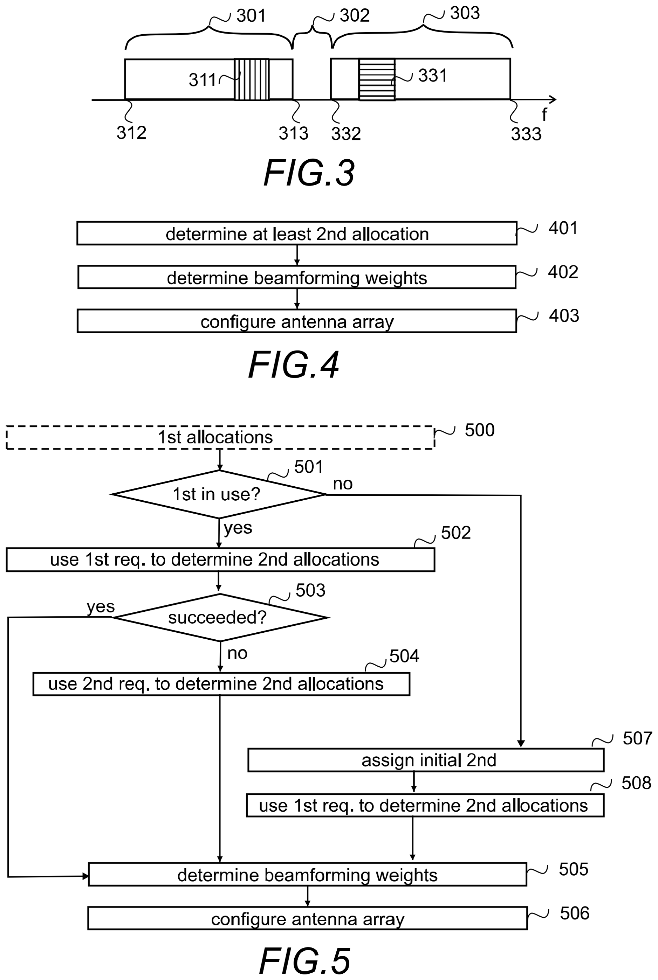

Fig. 3 is a schematic block diagram depicting an example of multi-band frequency allocations.

Referring to Fig. 3, there is a first operating band, for example band A, defined by a first frequency range 301, a bandwidth gap 302, and a second operating band, for example band B, defined by a second frequency range 303. The first frequency range 301 is defined by a lowest frequency 312 and a highest frequency 313 of the first operating band, denoted by $f_{Low,A}$, $f_{High,A}$, correspondingly, in the equations below. A dashed portion 311 depicts a frequency allocation on the first operating band, the frequency allocation being denoted by $f_A$ in equations below. The second frequency range 303 is defined by a lowest frequency 332 and a highest frequency 333 of the second operating band, denoted by $f_{Low,B}$, $f_{High,B}$, correspondingly, in the equations below. A dashed portion 331 depicts a frequency allocation on the second operating band, the frequency allocation being denoted by $f_B$ in the equations below. A frequency allocation may be called a carrier, or a carrier frequency channel.

Fig. 4 illustrates an example functionality of an apparatus. The apparatus may be any apparatus or electronic device, comprising an antenna array of frequency-independent phase shifters, the antenna array being shared between a plurality of operating bands. For example, the apparatus may be a radio access network element, such as an access node or base station, or an apparatus comprised in a radio access network element, or the apparatus may be a terminal device, for example a user equipment, or comprised in the terminal device.

Referring to Fig. 4, the apparatus determines (block 401), based on a first frequency allocation on a first operating band with first angular directions, at least a second frequency allocation on a second operating band with a second angular directions, so that a first set of predefined requirements comprising at least beamforming requirements on frequency allocations and angular directions are met on all operating bands. Different non-limiting examples how to determine frequency allocations with angular directions are described in more detail below. For example, the first frequency allocation may be an existing allocation for communications, or an initial allocation, which may have been freely selected. The predefined beamforming requirements may comprise beamwidth requirements, beam peak direction requirements, and beam directivity requirements. Further, the predefined beamforming requirements may comprise other requirements, for example allowable frequency ranges for the operating bands and allowable frequency allocations. The allowable frequency allocations may be set per an operating band, or they may be common to all operating bands, or any combination thereof.

Using the example of Fig. 3, and assuming that $\phi_A$ is a target azimuth angle, i.e. a desired azimuth angle, for the frequency allocation in band A, $\theta_A$ is a target elevation angle, i.e. a desired elevation angle, for the frequency allocation in band A, $\phi_B$ is a target azimuth angle, i.e. a desired azimuth angle, for the frequency allocation in band B and $\theta_B$ is a target elevation angle, i.e. a desired elevation angle, for the frequency allocation in band B, $\hat{\theta}$ and $\hat{\phi}$ denoting corresponding estimates, a non-limiting example of what the predefined beamforming requirements may comprise is:

$$0 < \theta_A < 180, 0 < \theta_B < 180$$

$$-90 < \phi_A < 90, -90 < \phi_B < 90$$

$$f_A * \sin\hat{\theta}_A * \sin\hat{\phi}_A = f_B * \sin\hat{\theta}_B * \sin\hat{\phi}_B \qquad \text{(Eq. 1)}$$

$$f_A * \cos\hat{\theta}_A = f_B * \cos\hat{\theta}_B \qquad \text{(Eq. 2)}$$

$$\left|\theta_A - \hat{\theta}_A\right| < \Delta\theta_A, \left|\phi_A - \hat{\phi}_A\right| < \Delta\phi_A \qquad \text{(Eq. 3)}$$

$$\left|\theta_B - \hat{\theta}_B\right| < \Delta\theta_B, \left|\phi_B - \hat{\phi}_B\right| < \Delta\phi_B \qquad \text{(Eq. 4)}$$

$$f_A \in \left[f_{\text{Low,A}}, f_{\text{High,A}}\right], f_B \in \left[f_{\text{Low,B}}, f_{\text{High,B}}\right], \qquad \text{(Eq. 5)}$$

$$(\theta_A, \phi_A) \in \text{target angular coverage of band A} \qquad \text{(Eq. 6)}$$

$$(\theta_B, \phi_B) \in \text{target angular coverage of band B} \qquad \text{(Eq. 7)}$$

In the above equations, values of $\Delta\theta_A$, $\Delta\phi_A$, $\Delta\theta_B$, $\Delta\phi_B$ are dependent on beamforming related specifications, e.g., tolerance on angular errors of the beam, that may be specified by a manufacturer of the antenna array, for example, and/or specified in an industrial standard, for example in 3GPP standard or in IEEE 802 family standard, or in Next Generation Mobile Networks Alliance specification.

Returning to Fig. 4, when the frequency allocations with angular directions have been determined, beamforming weights are determined (block 402) based on at least one of a plurality of the frequency allocations with angular directions, and the antenna array is configured (block 403) to apply the beamforming weights. For example, if there are two operating bands, as in the example of Fig. 3, and two frequency allocations with angular directions, one per band, beamforming weights may be determined based on the frequency allocation with the angular directions of the band A, or based on the frequency allocation with the angular directions of the band B, the resulting beamforming weights will be the same. Naturally, it is possible to apply the frequency allocation with angular directions of the band A and the frequency allocation with angular directions of the band B to determine the beamforming weights. As said above with Fig. 2, the same beamforming weights are used for transmission of all operating bands at a time, i.e. one set of beamforming weights are applied at a time, and the beamforming weights, determined so that the frequency allocations with angular directions meet the predefined requirements on all operating bands, create proper beams on all operating bands.

The determining (block 401) the frequency allocations with angular directions may be performed using searching-based solutions, examples of which are described with Fig. 5, Fig. 6 and Fig. 7.

The determining (block 401) the frequency allocations with angular directions may be performed by retrieving the values from a table, which comprises for the operating bands angular directions and corresponding frequency values meeting the predefined requirements. The values in the table may be calculated offline and in advance. For example, in a distributed scenario, values to the table may be (re)calculated by a central unit during a distributed unit start up and stored to a memory of the distributed unit so that during use no time and power are consumed in calculations. In another example, the apparatus, or a baseband unit of the apparatus, for example, calculates the values in advance and stores it to the memory for later use of the apparatus, for example by a radio unit that may be co-located or non- co-located with the baseband unit. The use of the table is especially suitable for beamforming methods that are based on grid-of-beam beamforming or on a beam codebook. Using the example of Fig. 3, and assuming that there are two different sets of the predefined requirements, the second set (set 2) being a more relaxed set, to be used if the determining using the first set (set 1) fails, a table could be as follows:

| Set | Pair id | Band A | | | Band B | | |
|---|---|---|---|---|---|---|---|
| 1 | 1 | fA1 | dA1 | Beam_set_1A_s1 | fB(fA1,dA1) | dB(fA1,dA1) | Beam_set_1B_s1 |
| | 2 | fA1 | dA2 | Beam_set_2A_s1 | fB(fA1,dA2) | dB(fA1,dA2) | Beam_set_2B_s1 |
| | | | | | | | |
| | N | fA1 | dAN | Beam_set_NA_s1 | fB(fA1,dAN ) | dB(fA1,dAN ) | Beam_set_NB_s1 |
| | N+ 1 | fA2 | dA1 | Beam_set_(N+1)A_s 1 | fB(fA2,dA1) | dB(fA2,dA1) | Beam_set_(N+1)B_s 1 |
| | N+ 2 | fA2 | dA2 | Beam_set_(N+2)A_s 1 | fB(fA2,dA2) | dB(fA2,dA2) | Beam_set_(N+2)B_s 1 |
| | | | | | | | |
| 2 | 1 | fA1 , | dA1 , | Beam_set_1A_s2 | fB(fA1',dA1' ) | dB(fA1',dA1' ) | Beam_set_1B_s2 |
| | 2 | fA1 , | dA2 , | Beam_set_2A_s2 | fB(fA1',dA2' ) | dB(fA1',dA2' ) | Beam_set_2B_s2 |

In the table fB(fAx,dAy) and dB(fAx,dAy) represent the frequency allocation and angular direction for band B as a function of given frequency allocation fAx and angular direction dAy of band A.

The apparatus may be configured to determine (block 401) the frequency allocations with angular directions by using a tool configured to implement the predefined requirements. The tool may be an artificial intelligence, e.g. machine learning, based tool or a tool comprising mathematical nonlinear optimization toolboxes, configured to solve non-linear equations representing the predefined beamforming requirements.

For example, the tool may be configured to solve the following (using the example of Fig. 3, and annotations described above with equations 1 to 7):

$$\text{let}\quad x_{1A} = \sin\hat{\theta}_A ; x_{2A} = \cos\hat{\theta}_A ;\quad y_{1A} = \sin\hat{\phi}_A ; y_{2A} = \cos\hat{\phi}_A ;\quad x_{1B} = \sin\hat{\theta}_B ; x_{2B}=\cos\hat{\theta}_B;\ y_{1B} = \sin\hat{\phi}_B ; y_{2B}=\cos\hat{\phi}_B$$

**Find** $f_A, f_B, x_{1A}, x_{2A}, y_{1A}, y_{2A}, x_{1B}, x_{2B}, y_{1B}, y_{2B}$

**Subject to**

$$x_{1A}^2 + x_{2A}^2 = 1;\ y_{1A}^2 + y_{2A}^2 = 1;\ x_{1B}^2 + x_{2B}^2 = 1,\ y_{1B}^2 + y_{2B}^2 = 1;$$

$$f_A * x_{1A} * y_{1A} = f_B * x_{1B} * y_{1B}$$

$$f_A * x_{2A} = f_B * x_{2B}$$

$$|\theta_A - \sin^{-1}(x_{1A})| < \Delta\theta_A, |\phi_A - \sin^{-1}(y_{1A})| < \Delta\phi_A$$

$$|\theta_B - \sin^{-1}(x_{1B})| < \Delta\theta_B, |\phi_B - \sin^{-1}(y_{1B})| < \Delta\phi_B$$

$$f_A \in [f_{\text{Low,A}}, f_{\text{High,A}}], f_B \in [f_{\text{Low,B}}, f_{\text{High,B}}]$$

$$(\theta_A, \phi_A) \in \text{target angular coverage of band A}$$

$$(\theta_B, \phi_B) \in \text{target angular coverage of band B}$$

$$0 < \theta_A < 180, 0 < \theta_B < 180$$

$$-90 < \phi_A < 90, -90 < \phi_B < 90$$

In the example of Fig. 5 the apparatus performing the functionality is configured to allocate resources to further apparatuses, including second apparatuses.

Referring to Fig. 5, it is assumed that the apparatus performing the functionality has determined (block 500), or allocated, the first allocations, i.e. the first frequency allocation with the first angular directions. The first allocations, i.e. the first resources may be allocated to be used between the apparatus and a second apparatus, meaning herein that the first resources may be active, i.e. in use, for example there exists a connection between the apparatus and the second apparatus, or a connection establishment has been triggered, or the carrier being added. The operating band for the first allocations, for example, may be selected, or determined, in various ways, and the same principles may be used when a further operating band is selected, or determined. For example, the apparatus may be configured with one or more rules that are followed. The rule(s) may take into account network requirements, such as priorities of operating bands, the priorities relating e.g. to radio frequency/throughput performance of a band, and/or band-specific beamforming requirements. The rule(s) may prioritize a band with stricter beamforming requirements and/or with a narrower frequency range, thereby increasing probability to find feasible allocations in other operating bands such that preferred frequence allocations and angular directions can be determined, or derived. The rule(s) may take into account frequency adjustment capability of a second apparatus. Naturally, the operating bands may be randomly selected.

When the first frequency allocation with the first angular directions are allocated to be used (block 501: yes) between the apparatus and a second apparatus, i.e. they are active, the apparatus tries to determine (block 502) second allocations, i.e. the second frequency allocation with the second angular directions, using the first set of predefined requirements. If that fails, i.e. it does not succeed (block 503: no), the apparatus determines (block 504) the second frequency allocation with the second angular directions using a second set of predefined beamforming requirements. The second set of predefined beamforming requirements is a relaxed set compared to the first set of predefined beamforming requirements, allowing at least one of a wider beamwidth, less accurate beam peak direction requirements, or less accurate beam directivity requirements.

In an implementation that is based on expected angular directions of a second apparatus, the determining the second frequency allocation with the second angular directions in block 502 and in block 504 may be performed by searching for a second frequency allocation on the second operating band using the expected second angular directions. The expected second angular directions can be selected amongst directions fulfilling equations Eq.4 and Eq. 7. In another implementation that is based on expected frequency allocation of a second apparatus, the determining the second frequency allocation with the second angular directions in block 502 and in block 504 may be performed by searching for second angular directions using the expected second frequency allocation. The expected second frequency allocation can be selected amongst frequencies within the second operating band.

When the second frequency allocation with the second angular directions have been determined, in the illustrated example using either the first set or the second set of requirements, beamforming weights are determined (block 505) and the antenna array is configured to apply the beamforming weights (block 506), as described in more detail above.

When the first frequency allocation with the first angular directions are not allocated to be used (block 501: no) between the apparatus and a second apparatus, the apparatus assigns (block 507) an initial value for the second allocation and uses (block 508) the first set of predefined requirements to determine the second frequency allocation with the second angular directions. In the implementation that is based on expected angular directions of a second apparatus, initial second angular directions may be assigned in block 507, and the determining the second frequency allocation with the second angular directions may be performed by searching for a second frequency allocation on the second operating band using the initial second angular directions. In the implementation that is based on expected frequency allocation of a second apparatus, initial second frequency allocation on the second operating band may be assigned in block 507, and the determining the second frequency allocation with the second angular directions may be performed by searching for second angular directions using the initial second frequency allocation.

When the second frequency allocation with the second angular directions have been determined, in block 508, beamforming weights are determined (block 505) and the antenna array is configured to apply the beamforming weights (block 506), as described in more detail above.

Even though not mentioned, the frequency allocations may be assigned, by the apparatus, after being determined, to a corresponding second apparatus.

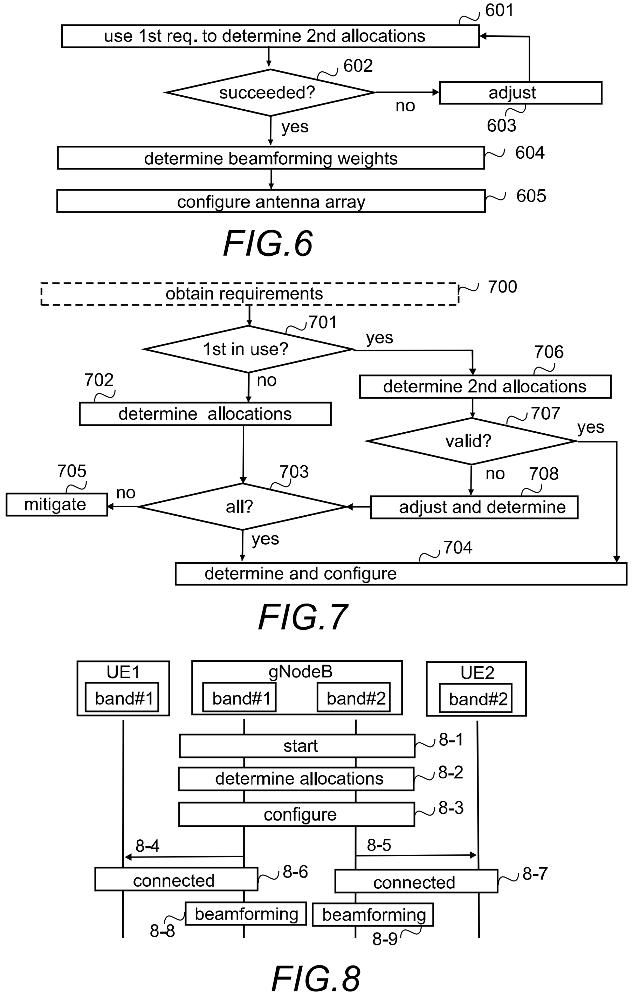

Fig. 6 illustrates an example functionality that the apparatus may be configured to perform. The functionality may be combined with the functionality described above with Fig. 4 and/or with Fig. 5. In the example it is assumed that the apparatus performing the functionality has determined, or allocated, the first allocations, i.e. the first frequency allocation with the first angular directions.

Referring to Fig. 6, the apparatus tries to determine (block 601) second allocations, i.e. the second frequency allocation with the second angular directions, using the first set of predefined requirements, as described above. If that fails, i.e. it does not succeed (block 602: no), the apparatus adjusts (block 603), at least one of the first frequency allocation or the first angular directions, for example. In the implementation that is based on expected angular directions of a second apparatus, and initial second angular directions are assigned, the apparatus adjusts (block 603) at least one of the first angular directions or the initial second angular directions. In the implementation that is based on expected frequency allocation of a second apparatus, and initial second frequency allocation is assigned, the apparatus adjusts (block 603) at least one of the first frequency allocation or the initial second frequency allocation. After the adjusting, the apparatus tries again to determine (block 601) the second frequency allocation with the second angular directions so that the first set of predefined requirements are met. The apparatus repeats the adjusting (block 603) and the determining (block 601) until the first set of predefined requirements are met, i.e. the determining succeeds.

When the determining the second frequency allocation with the second angular directions succeeds (block 602: yes), beamforming weights are determined (block 604) and the antenna array is configured correspondingly (block 605), as described in more detail above.

Even though not mentioned, the frequency allocations may be assigned, by the apparatus, after being determined, to corresponding second apparatuses , i.e. after a frequency allocation has been determined, it may be assigned to a corresponding second apparatus.

Fig. 7 illustrates an example functionality in a use case in which an access node, for example a base station, configures its antenna array to be able to communicate with terminal devices, such as user equipment. It should be appreciated that any other apparatus, including terminal devices, may be configured to perform a similar functionality.

Referring to Fig. 7, the predefined beamforming requirements have been obtained (block 700), and the process starts by checking (block 701), whether a first allocation is in use. In the illustrated example, it is checked, whether any of terminal devices that are camping on a cell provided by the access node is scheduled in the frequency domain comprising the plurality of the operating bands.

If none of the terminal devices is scheduled (block 701: no), allocations are determined (block 702) by finding frequency allocations with angular directions for a terminal device, or for terminal devices in each of the plurality of the operating bands that meet the beamforming requirements of all of the plurality of the operating bands.

Then it is checked (block 703), whether there exists feasible pairs of frequency allocations and/or angular directions for all of the plurality of the operating bands. If there is (block 703: yes), beamforming weights corresponding to terminal devices' angular directions are determined (block 704), and the antenna array is configured (block 704) correspondingly, as described in more detail above.

If there does not exist feasible pairs of frequency allocations and/or angular directions for all of the plurality of the operating bands (block 703: no), in the illustrated example the access nodes mitigate (block 705). In other words, one or more mitigation actions are performed. Non-limiting examples of mitigation actions include relaxing the beamforming requirements, e.g. as described above, switching to single-band beamforming settings and scheduling users (second apparatuses) in different time instances, or splitting the antenna array to multiple sub-arrays, each sub-array operating in a single-band manner.

If one or more of the terminal devices are already scheduled (block 701: yes) in the frequency domain, second allocations are determined (block 706). In other words, in the illustrated example, frequency allocations with angular directions are found for frequency-unallocated terminal device(s) in the plurality of the operational bands such that the beamforming requirements are met in all bands, as described above. Then it is checked (block 707), whether the frequency allocations and/or angular directions are valid. In other words, it is checked, whether the determining in block 706 succeeded. If they are valid (block 707: yes), the process continues to block 704 to determine beamforming weights and configure the antenna array. If any of the frequency allocations and/or angular directions is not valid (block 707: no), in the illustrated example one or more frequency allocations are adjusted (block 708), and frequency allocations with angular directions are re-determined (block 708) for allocated and non-allocated terminal devices such that the beamforming requirements are met in all bands. Then the process proceeds to block 703 to check, whether there exists feasible pairs of frequency allocations and/or angular directions for all of the plurality of the operating bands.

Fig. 8, Fig. 9 and Fig. 10 illustrate different non-limiting use case scenarios, in which it is assumed, for the sake of clarity, that the apparatus comprising at least one antenna array shared between two operating bands, band#1 and band#2, is an access node, or base station, e.g. a multiband base station, denoted by gNodeB, providing access to apparatuses, denoted by UEs.

Referring to Fig. 8 the access node starts (block 8-1) up and starts to add new frequency allocations (carriers) for both bands. Then the access node determines (block 8-2) allocations for both bands as described above, for example with block 401, blocks 507 and 508, blocks 702 and 703. In other words, in block 8-2 requirements on allocations and angular directions of all bands are considered, and frequency allocations with angular directions of terminal devices in both bands allow to create beams pointing to expected terminal device directions. Then beamforming weights are determined and the antenna array is configured (block 8-3). The configuration may include updating beamforming controls to frequency allocations.

Since no terminal devices are connected to the access node, the access node broadcast (message 8-4, message 8-5) over a band corresponding frequency information, i.e. the frequency allocation for the band, or a list of feasible frequency allocations in the band in question.

In the illustrated example, a terminal device UE1 in band#1 and a terminal device UE2 in band#2 both establish a connection to the access node and enter a connected mode (block 8-6, block 8-7). The antenna array in the access node performs the beamforming (block 8-8, block 8-9) as configured.

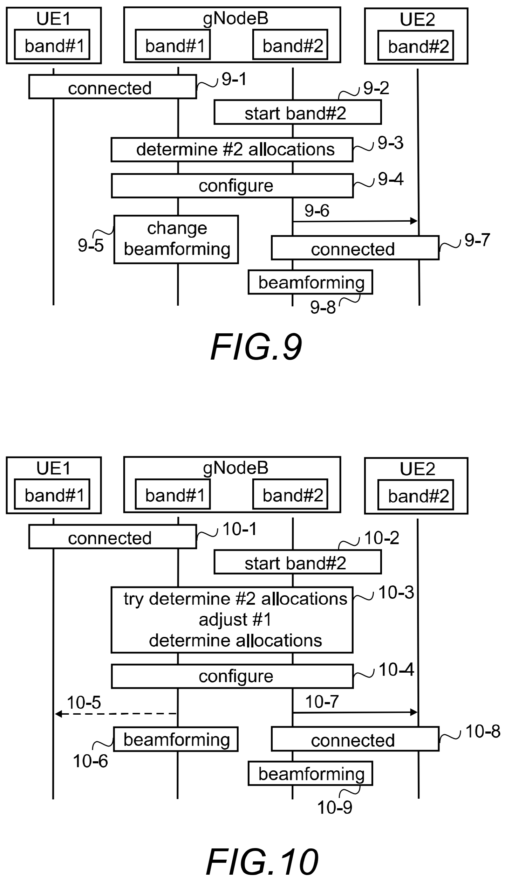

Fig. 9 and Fig. 10 illustrates use case scenarios in which a frequency allocation (carrier) exists in band#1, and frequency allocation in band#2 will be newly added.

Referring to Fig. 9, a terminal device UE1 in band#1 is in a connected mode (block 9-1). While UE1 is in the connected mode, the access node starts (block 9-2) up band#2 and starts to add a new frequency allocation (carrier) for band#2. Therefore the access node determines (block 9-3) allocations for band#2 as described above, for example with block 401, blocks 502 and 504, blocks 706, 707 and 708. In other words, in block 9-3 requirements on allocations and angular directions of all bands are considered, and in the illustrated example it is assumed that there are feasible allocations meaning that frequency allocations with angular directions of terminal devices in both bands allow to create beams pointing to expected terminal device directions. Then beamforming weights are determined and the antenna array is configured (block 9-4), or more precisely reconfigured. The configuration may include updating beamforming controls to frequency allocations. Configuration of the antenna array may cause that the beamforming on band#1 is changed (block 9-5). Further, the access node broadcast (message 9-6) over band#2 corresponding frequency information, i.e. the frequency allocation for the band, or a list of feasible frequency allocations in band#2.

In the illustrated example, a terminal device UE2 in band#2 establishes a connection to the access node and enter a connected mode (block 9-7). The antenna array in the access node performs the beamforming (block 9-8) in band#2 as configured.

Referring to Fig. 10, a terminal device UE1 in band#1 is in a connected mode (block 10-1). While UE1 is in the connected mode, the access node starts (block 10-2) up band#2 and starts to add a new frequency allocation (carrier) for band#2. Therefore the access node tries to determine (block 10-3) allocations for band#2 as described above, for example with block 401, blocks 502 and 504, blocks 706, 707 and 708. In other words, in block 10-3 requirements on allocations and angular directions of all bands are considered. In the illustrated example of Fig. 10 it is assumed that there is not a feasible allocation with the existing allocation in band#1. Hence, in the illustrated example, the allocation in band#1 is adjusted (block 10-3), and allocations for band#2 are determined (block 10-3) based on the adjusted allocation in band#1. In other words, feasible paired allocations are searched for in both bands in block 10-3. Although not illustrated in Fig. 10, the access node may be configured to request UE1 to provide its information on a beamforming requirement to adjust, or select a new allocation that optimize the beamforming performance. In the illustrated example it is assumed that feasible paired allocations are found, meaning that frequency allocations with angular directions of terminal devices in both bands are determined such that they allow to create beams pointing to expected terminal device directions. Then beamforming weights are determined and the antenna array is configured (block 10-4), or more precisely reconfigured. The configuration may include updating beamforming controls to frequency allocations. The access node may reconfigure (message 10-5) UE1 with the new frequency information in band#1, for example by means of inter-frequency handover mechanism, and performs the beamforming (block 10-6) in band#1 according to the new configuration. Further, the access node broadcast (message 10-7) over band#2 corresponding frequency information, i.e. the frequency allocation for band#2, or a list of feasible frequency allocations in band#2.

In the illustrated example, a terminal device UE2 in band#2 establishes a connection to the access node and enter a connected mode (block 10-8). The antenna array in the access node performs the beamforming (block 10-9) in band#2 as configured.

The above use cases in Fig. 9 and Fig. 10 may be used also when frequency allocations (carriers) in some bands need to be re-allocated.

As can be seen from the above examples, solutions that enable multi-band analog beamforming for antenna arrays of frequency-independent phase shifters, e.g. antenna arrays of frequency-flat single-band phase shifters. The solutions provide a compromise between beamforming performance, e.g. created desired beam peak direction for each operating band, and implementation issues, e.g. maintaining the reasonable size of an antenna and its power consumptions, since the number of radio frequency components remains reasonable while maximizing utilization of available radio frequency components in an antenna array of frequency-independent phase shifters.

The blocks and related functions and information exchange described above by means of Fig. 1 to Fig. 10 are in no absolute chronological order, and some of them may be performed simultaneously or in an order differing from the given one. Other functions can also be executed between them or within them, and other information may be transmitted, and/or other rules applied. For example, if a more dynamic beamforming approach is applied, for example an approach based on reference signal based channel estimations, additional processing may be performed, for example to obtain expected angular directions of a beam and determining relevant frequency allocations. Some of the blocks or part of the blocks or one or more pieces of information can also be left out or replaced by a corresponding block or part of the block or one or more pieces of information. Furthermore, some of the blocks in one example may be combined with another example.

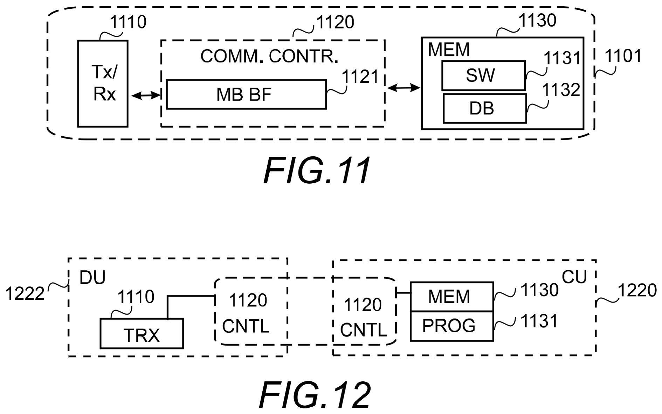

Fig. 11 illustrates an apparatus 1101 according to some embodiments. The apparatus 1101 may be any apparatus, or electronic device, that may be configured to determine frequency allocations with angular directions and beamforming weights for an antenna array of frequency-independent phase shifters and configure the antenna array to provide a multiband antenna array. Different examples of such apparatuses are described above. Fig. 12 illustrates an apparatus that may implement distributed functionality of the apparatus illustrated in Fig. 11.

The apparatus 1101 may comprise one or more communication control circuitries 1120, such as at least one processor, and at least one memory 1130 including one or more algorithms 1131, such as a computer program code (software, SW, or instructions), wherein the at least one memory and the computer program code (software) are configured, with the at least one processor, to cause the apparatus to carry out any one of the exemplified functionalities of a corresponding apparatus, described above with any of Fig. 1 to Fig. 10. Said at least one memory 1130 may also comprise at least one database (DB) 1132.

According to an embodiment, there is provided an apparatus comprising means for determining for an antenna array of frequency-independent phase shifters, based on a first frequency allocation on a first operating band with first angular directions, at least a second frequency allocation on a second operating band with a second angular directions, so that a first set of predefined requirements comprising at least beamforming requirements on frequency allocations and angular directions are met on all operating bands; means for determining beamforming weights based at least on one of a plurality of frequency allocations with angular directions; and means for configuring the antenna array to apply the beamforming weights.

Referring to Fig. 11, the one or more communication control circuitries 1120 of the apparatus 1101 comprise at least a multi-band beamforming (MB BF) circuitry 1121, which is configured at least to determine frequency allocations with angular directions on a plurality of operating bands, as discussed for example with Fig. 2 to Fig. 10. To this end, the multi-band beamforming circuitry 1121 of the apparatus 1101 is configured to carry out at least some of the functionalities described above, e.g., by means of Fig. 2 to Fig. 10, for example, using one or more individual circuitries.

Referring to Fig. 11, the memory 1130 may be implemented using any suitable data storage technology, such as semiconductor based memory devices, flash memory, magnetic memory devices and systems, optical memory devices and systems, fixed memory and removable memory.

Referring to Fig. 11, the apparatus 1101 may further comprise different interfaces 1110 such as one or more communication interfaces (TX/RX) comprising hardware and/or software for realizing communication connectivity according to one or more communication protocols. The one or more communication interfaces 1110 may enable connecting to the Internet and/or to a core network of a wireless communications network and/or to a radio access network and/or to other apparatuses within range of the apparatus. The one or more communication interface 1110 may provide the apparatus with communication capabilities to communicate in a cellular communication system and enable communication to different network nodes or elements or devices, for example. The one or more communication interfaces 1110 may comprise standard well-known components such as an amplifier, filter, frequency-converter, (de)modulator, and encoder/decoder circuitries, controlled by the corresponding controlling units, and one or more antennas.

In an embodiment, as shown in Fig. 12, at least some of the functionalities of the apparatus of Fig. 11 may be shared between two physically separate devices, forming one operational entity. Therefore, the apparatus may be seen to depict the operational entity comprising one or more physically separate devices for executing at least some of the described processes. Thus, the apparatus of Fig. 12, utilizing such shared architecture, may comprise a remote control or central unit CU 1220, such as a host computer or a server computer, operatively coupled (e.g. via a wireless or wired network) to a remote distributed unit DU 1222 located in an access device, for example. In an embodiment, at least some of the described processes may be performed by the CU 1220. In an embodiment, the execution of at least some of the described processes may be shared among the DU 1222 and the CU 1220.

Similar to Fig. 11, the apparatus of Fig. 12 may comprise one or more communication control circuitry (CNTL) 1120, such as at least one processor, and at least one memory (MEM) 1130, including one or more algorithms (PROG) 1131, such as a computer program code (software SW, or instructions) wherein the at least one memory and the computer program code (software, instructions) are configured, with the at least one processor, to cause the apparatus to carry out any one of the exemplified functionalities described above, e.g., by means of Fig. 1 to Fig. 10, for example.

In embodiments, the CU 1220 may generate a virtual network through which the CU 1220 communicates with the DU 1222. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (e.g. to the CU). External network virtualization is targeted to optimized network sharing. Another category is internal virtual networking which provides network-like functionality to the software containers on a single system.

In an embodiment, the virtual network may provide flexible distribution of operations between the DU and the CU. In practice, any digital signal processing task may be performed in either the DU or the CU and the boundary where the responsibility is shifted between the DU and the CU may be selected according to implementation.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as an access device or node or a network node or network entity, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware. The term 'circuitry' also covers, for example and if applicable to the particular claim element, a baseband integrated circuit for an access node or other computing or network device.

In an embodiment, at least some of the processes described in connection with Fig. 1 to Fig. 10 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Fig. 1 to Fig. 10 or operations thereof.

Embodiments and examples as described may also be carried out in the form of a computer process defined by a computer program or portions thereof. Embodiments of the functionalities described in connection with Fig. 1 to Fig. 10 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. The term "non-transitory," as used herein, is a limitation of the medium itself (i.e., tangible, not a signal ) as opposed to a limitation on data storage persistency (e.g., random access memory RAM vs. read only memory ROM). Coding of software for carrying out the embodiments as shown and described is well within the scope of a person of ordinary skill in the art.

Even though the embodiments have been described above with reference to examples according to the accompanying drawings, it is clear that the embodiments are not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus (1101, 1220) comprising:

   means for determining (401, 502, 508, 601, 702, 706, 8-2, 9-3, 10-3) for an antenna array (220) of frequency-independent phase shifters (225), the antenna array being shared between a plurality of operating bands (301, 303), based on a first frequency allocation on a first operating band with first angular directions, at least a second frequency allocation on a second operating band with a second angular directions, so that a first set of predefined requirements comprising at least beamforming requirements on frequency allocations and angular directions are met on all operating bands;
   means for determining (402, 505, 604, 704, 8-3, 9-4, 10-4) beamforming weights based at least on one of a plurality of frequency allocations with angular directions; and
   means for configuring (403, 506, 605, 704, 8-3, 9-4, 10-4) the antenna array (220) to apply the beamforming weights.

2. The apparatus (1101, 1220) of claim 1, wherein the predefined beamforming requirements comprise beamwidth requirements, beam peak direction requirements, and beam directivity requirements.

3. The apparatus (1101, 1220) of claim 2, wherein the predefined requirements further comprise allowable frequency ranges for the operating bands and allowable frequency allocations.

4. The apparatus (1101, 1220) of claim 2 or 3, further comprising:
   means for using (504), when the first frequency allocation with the first angular directions are allocated to be used between the apparatus and a second apparatus and determining the second frequency allocation with the second angular directions using the first set of predefined requirements fails, a second set of predefined beamforming requirements allowing at least one of a wider beamwidth, less accurate beam peak direction requirements, or less accurate beam directivity requirements to determine the second frequency allocation with the second angular directions.

5. The apparatus (1101, 1220) of any of preceding claims, further comprising:

means for adjusting (603), when determining the second frequency allocation with the second angular directions using the first set of predefined requirements fails, at least one of the first frequency allocation or the first angular directions;
means for determining (601), after the adjusting, the second frequency allocation with the second angular directions so that the first set of predefined requirements are met; and
means for repeating (602), when the determining, after the adjusting, the second frequency allocation with the second angular directions fails, the adjusting (603) at least one of the first frequency allocation or the first angular directions and the determining (601) the second frequency allocation with the second angular directions, until the first set of predefined requirements are met.

6. The apparatus (1101, 1220) of any of preceding claims, further comprising means for the determining of the second frequency allocation with the second angular directions by:

assigning (507) initial second angular directions; and
determining (508) the second frequency allocation with the second angular directions by searching for a second frequency allocation on the second operating band using the initial second angular directions.

7. The apparatus (1101, 1220) of claim 6, further comprising:

means for adjusting (603), when determining the second frequency allocation with the second angular directions using the first set of predefined requirements fails, at least one of the first angular directions or the initial second angular directions;
means for determining (601), after the adjusting, determining the second frequency allocation with the second angular directions so that the first set of predefined requirements are met; and
means for repeating (602), when the determining, after the adjusting, the second frequency allocation with the second angular directions fails, the adjusting (603) at least one of the first angular directions or the initial second angular directions and the determining (601) the second frequency allocation with the second angular directions until the first set of predefined requirements are met.

8. The apparatus (1101, 1220) of any of claims 1 to 5, further comprising means for the determining of the second frequency allocation with the second angular directions by:

assigning (507) initial second frequency allocation on the second operating band; and
determining (508) the second frequency allocation with the second angular directions by searching for second angular directions using the initial second frequency allocation.

9. The apparatus (1101, 1220) of claim 8, further comprising:

means for adjusting (603), when determining the second frequency allocation with the second angular directions using the first set of predefined requirements fails, at least one of the first frequency allocation or the initial second frequency allocation;
means for determining (601), after the adjusting, the second frequency allocation with the second angular directions so that the first set of predefined requirements are met; and
means for repeating (602), when the determining, after the adjusting, the second frequency allocation with the second angular directions fails, the adjusting (603) one of the first frequency allocation or the initial second frequency allocation and the determining (601) the second frequency allocation with the second angular directions until the first set of predefined requirements are met.

10. The apparatus (1101, 1220) of claim 3, further comprising means for the determining (401) of frequency allocations with corresponding angular directions by using a tool configured to implement the predefined requirements.

11. The apparatus (1101, 1220) of any of claims 1 to 3, further comprising means for the determining (401) of the second frequency allocation with the second angular directions by retrieving the values from a table comprising for the operating bands angular directions and corresponding frequency values meeting the predefined requirements.

12. The apparatus (1101, 1220) of any of the preceding claims, wherein the apparatus is or is comprised in a radio access network element.

13. The apparatus (1101, 1220) of any of claims 1 to 7, wherein the apparatus is or is comprised in a terminal device.

14. A method comprising:

determining (401, 502, 508, 601, 702, 706, 8-2, 9-3, 10-3), by an apparatus, for an antenna array (220) of frequency-independent phase shifters (225), based on a first frequency allocation on a first operating band with first angular directions, at least a second frequency allocation on a second operating band with a second angular directions, so that a first set of predefined requirements comprising at least beamforming requirements on frequency allocations and angular directions are met on all operating bands (301, 303);
determining (402, 505, 604, 704, 8-3, 9-4, 10-4), by the apparatus, beamforming weights based at least on one of a plurality of frequency allocations with angular directions; and
configuring (403, 506, 605, 704, 8-3, 9-4, 10-4) the antenna array (220) to apply the beamforming weights.

15. A computer readable medium comprising program instructions which, when executed by an apparatus, cause the apparatus to perform at least:

determining (401, 502, 508, 601, 702, 706, 8-2, 9-3, 10-3) for an antenna array (220) of frequency-independent phase shifters (225), based on a first frequency allocation on a first operating band with first angular directions, at least a second frequency allocation on a second operating band with a second angular directions, so that a first set of predefined requirements comprising at least beamforming requirements on frequency allocations and angular directions are met on all operating bands (301, 303);
determining (402, 505, 604, 704, 8-3, 9-4, 10-4) beamforming weights based at least on one of a plurality of frequency allocations with angular directions; and
configuring (403, 506, 605, 704, 8-3, 9-4, 10-4) the antenna array (220) to apply the beamforming weights.

FIG.1

FIG.2

301    302    303

311    331

312    313  332    333  f

## FIG.3

| determine at least 2nd allocation | 401 |
| determine beamforming weights | 402 |
| configure antenna array | 403 |

## FIG.4

1st allocations    500

501
1st in use?    no

yes

use 1st req. to determine 2nd allocations    502

503
yes    succeeded?

no

use 2nd req. to determine 2nd allocations    504

assign initial 2nd    507

use 1st req. to determine 2nd allocations    508

determine beamforming weights    505

configure antenna array    506

## FIG.5

601
use 1st req. to determine 2nd allocations

602
succeeded?

adjust

603

no

yes

determine beamforming weights — 604

configure antenna array — 605

## FIG.6

obtain requirements — 700

701
1st in use?

yes

706
determine 2nd allocations

no

702
determine allocations

707
valid?

yes

705
mitigate

no

703
all?

708
adjust and determine

no

yes

704
determine and configure

## FIG.7

| UE1 | gNodeB | UE2 |
|---|---|---|
| band#1 | band#1 | band#2 | band#2 |

start — 8-1

determine allocations — 8-2

configure — 8-3

8-4

8-5

connected — 8-6

connected — 8-7

beamforming

beamforming

8-8

8-9

## FIG.8

*FIG.9*

*FIG.10*

*FIG.11*

*FIG.12*

# EP 4 734 392 A1

Europäisches
Patentamt
European
Patent Office
Office européen
des brevets

# EUROPEAN SEARCH REPORT

**Application Number**

EP 25 21 0128

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/327734 A1 (TALVITIE JUKKA OLAVI [FI] ET AL) 12 October 2023 (2023-10-12) * paragraphs [0064] - [0066], [0083], [0074] - [0076], [0087], [0094] - [0095], [0098] - [0099], [0101] - [0105], [0112] - [0114]; figures 4,5 * | 1-15 | INV. H04B7/06 H04B7/12 H04W72/0453 |
| X | US 2024/322447 A1 (DU XIANFENG [CN]) 26 September 2024 (2024-09-26) * paragraphs [0085], [0092] - [0093], [0140], [0143] - [0144], [0168] - [0172], [0183], [0220], [0223], [0246] - [0248]; figures 2,3 * * paragraphs [0153], [0281], [0284], [0296] - [0305]; figure 6 * | 1-15 | |
| A | US 11 621 754 B2 (AGHAJANZADEH SAHAR MOLLA [CA]; NESHAASTEGARAN PEYMAN [CA] ET AL.) 4 April 2023 (2023-04-04) * column 1, lines 19-23 * * column 2, line 41 - column 4, line 5 * * column 6, line 5 - column 8, line 26; claim 8; figures 1,5 * | 1-15 | |
| A | WO 2024/163198 A1 (QUALCOMM INC [US]) 8 August 2024 (2024-08-08) * paragraphs [0006], [0046], [0112] * | 1-15 | TECHNICAL FIELDS SEARCHED (IPC) H04W H04B |

The present search report has been drawn up for all claims

| Place of search | Date of completion of the search | Examiner |
|---|---|---|
| Munich | 25 February 2026 | Franz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 0128

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2026

| Patent document cited in search report | Publication date | Patent family member(s) | | Publication date |
|---|---|---|---|---|
| US 2023327734 A1 | 12-10-2023 | EP | 3968535 A1 | 16-03-2022 |
| | | US | 2023327734 A1 | 12-10-2023 |
| | | WO | 2022053323 A1 | 17-03-2022 |
| US 2024322447 A1 | 26-09-2024 | CN | 116232388 A | 06-06-2023 |
| | | US | 2024322447 A1 | 26-09-2024 |
| | | WO | 2023098823 A1 | 08-06-2023 |
| US 11621754 B2 | 04-04-2023 | CN | 116325535 A | 23-06-2023 |
| | | EP | 4214844 A1 | 26-07-2023 |
| | | US | 2022116086 A1 | 14-04-2022 |
| | | WO | 2022073505 A1 | 14-04-2022 |
| WO 2024163198 A1 | 08-08-2024 | CN | 120569641 A | 29-08-2025 |
| | | EP | 4659043 A1 | 10-12-2025 |
| | | US | 2024255602 A1 | 01-08-2024 |
| | | WO | 2024163198 A1 | 08-08-2024 |

EPO FORM P0459

For more details about this annex : see Official Journal of the European Patent Office, No. 12/82